# EUROPÄISCHE PATENTSCHRIFT

(11) **EP 2 430 098 B1**
(45) Veröffentlichungstag und Bekanntmachung des Hinweises auf die Patenterteilung: **03.09.2014**
(21) Anmeldenummer: 10721753.1
(22) Anmeldetag: 11.05.2010
(51) Int. Cl.: C08L 75/04

(54) **HYBRIDSCHAUM**
HYBRID FOAM
MOUSSE HYBRIDE

(30) Priorität: 11.05.2009 EP 09159893
(43) Veröffentlichungstag der Anmeldung: 21.03.2012
(73) Patentinhaber: BASF SE, 67056 Ludwigshafen (DE)
(72) Erfinder: PRISSOK, Frank, 49448 Lemförde (DE); MAYER, Steffen, 49459 Lembruch (DE); AEPKER, Tanja, 32351 Stemwede-Wehdem (DE); GREVER, Maike, 32791 Lage-Waddenhausen (DE); KRANZUSCH, Daniela, 32369 Rahden (DE); NIEMANN, Marlene, 49163 Bohmte (DE); FELIX Florian, 82467 Garmisch-Partenkirchen (DE)
(86) Internationale Anmeldenummer: PCT/EP2010/056406
(87) Internationale Veröffentlichungsnummer: WO 2010/130706

(56) Entgegenhaltungen:
- WO-A1-00/44821
- WO-A1-2005/026243
- DE-A1- 3 810 595
- US-A1- 2005 027 025

## Beschreibung

Die Erfindung betrifft einen Hybridschaum auf Basis eines hochelastischen thermoplastischen Polyurethans (TPU), ein Verfahren zur Herstellung und die Verwendung des Schaums.

Die Verwendung von weichen, geschlossenzelligen und hochelastischen Funktionswerkstoffen für die Sport-, Schuh- und Bekleidungsindustrie auf Basis von Chloroprenschäumen ist bekannt. Aufgrund eines an sich guten Rückstellungsvermögens in Kombination mit der geringen Dichte und Geschlossenzelligkeit werden derartige Schäume im großen Umfang für Taucher- und Surf- und Schwimm- und Seerettungsanzüge sowie Stiefel und andere Ausrüstungsgegenstände im Marina-Bereich eingesetzt. Die Herstellung von Chloroprenschäumen ist aber aufwendig. Außerdem weisen Chloroprenschäume eine nicht befriedigende Lichtbeständigkeit, weshalb sie vorzugsweise schwärz eingefärbt sind, und eine nur geringe Reißfestigkeit und Reißdehnung auf.

Es ist bereits bekannt, Schäume sowie Polyurethanfolien auf Basis von TPU herzustellen, die im Wesentlichen geschlossenzellige Poren aufweisen. Thermoplastische Polyurethanfolien, die im Wesentlichen geschlossenzellige Poren aufweisen, sind beispielsweise aus der DE 3810595 A1 bekannt. Sie werden dadurch hergestellt, dass vor der Herstellung der Folie ein Treibmittel zugefügt wird und die Aufschäumung durch das Treibmittel im Wesentlichen erst nach Bildung des thermoplastischen Polyurethans durchgeführt wird. Die erhaltenen Folien können mindestens monoaxial gereckt werden. Aus der EP 0 692 516 A1 sind thermoplastische sogenannte Doppelschäume bekannt, bei denen als Basismasse ein thermoplastisches Polyurethan verwendet wird, wobei mindestens zwei getrennt voneinander ablaufende Schäumprozesse stattfinden, nämlich durch ein chemisches Treibmittel und parallel dazu durch eingearbeitete sogenannte Microballons. Aus der WO 2005/026243 A1 ist bekannt, in expandierbaren Zusammensetzungen auf Basis von TPU expandierbare Mikrospheren in Form von Mikrohohlkugeln einzusetzen, die aus einer dünnen Kunststoffhülle bestehen, wobei die Kugeln mit Gas, in der Regel mit Kohlenwasserstoffen, gefüllt sind. Zur Verbesserung der mechanischen Eigenschaften derartiger Systeme ist aus der WO 2005/026243 A1 bekannt, ein Blend aus einem thermoplastischen Polyurethan mit Kautschuken zusammen mit wenigstens einem Treibmittel unter Bedingungen, die zu einer Expansion des Treibmittels führen, thermoplastisch zu verarbeiten.

Nachteilig an den bekannten Schäumen ist, dass diese häufig eine sehr hohe Härte und Steifigkeit aufweisen.

Aufgabe der vorliegenden Erfindung war es, einen Schaum zur Verfügung zu stellen, der hochelastisch ist, sich durch hohe Weichheit auszeichnet, vorzugsweise eine Matrixhärte im Bereich Shore A von 20 bis 70 besonders bevorzugt 30 bis 70 und dessen Spannung vorzugsweise bei 100% Dehnung < 0,5 MPa und bei 200% Dehnung < 1 MPa ist, der überwiegend geschlossenzellig und leicht herstellbar ist und eine verbesserte Beständigkeit gegenüber sichtbarem und UV-Licht aufweist.

Gegenstand der Erfindung ist ein elastischer Hybridschaum auf Basis
a) wenigstens eines thermoplastischen Polyurethans (TPU)
b) treibmittelgefüllter Kunststoffhohlkörper M mit einem Durchmesser von vorzugsweise maximal 200µm, gegebenenfalls
c) mindestens eines zusätzlichen chemischen und/oder physikalischen Treibmittels T und gegebenenfalls
d) Hilfs- und/oder Zusatzstoffen,
dadurch gekennzeichnet, dass der Hybridschaum wenigstens monoaxial gereckt ist, vorzugsweise 100 bis 500%, besonders bevorzugt 200 bis 400 %.

Unter Hybridschaum wird verstanden, dass der Schaum ein TPU gemeinsam mit einem davon unterschiedenen Kunststoff in der Form von Kunststoffhohlkörpern, vorzugsweise auf Basis Polystyrol oder Polyacrylnitril oder Copolmerer auf Basis Polystyrol oder Polyacrylnitril, aufweist. Bevorzugt handelt es sich um treibmittelgefüllte Kunststoffhohlkörper M.

Als thermoplastische Polyurethane können die üblichen und bekannten Verbindungen eingesetzt werden, wie sie beispielsweise im Kunststoffhandbuch, Band 7 "Polyurethane", Carl Hanser Verlag München Wien, 3. Auflage 1993, Seiten 455 bis 466 beschrieben sind.

Bevorzugt werden TPU eingesetzt, die einen Schmelzindex oder MFR (Meltflowratio; 190 °C/3,8 kg; DIN EN 1133) von 1 - 350 g/10 min, bevorzugt von 20 -150 g/10 min besitzen. Die Verwendung von TPU für expandierbare bzw. expandierte TPU ist jedoch nicht auf einen bestimmten MFR beschränkt.

Unter thermoplastischen Polyurethanen können im Sinne der vorliegenden Erfindung weichmacherfreie und weichmacherhaltige TPU, insbesondere solche mit einem Gehalt von 0 - 70 Gew.-%, vorzugsweise 0 bis 50 Gew.-%, bezogen auf das Gewicht der Mischung, an üblichen Weichmacher verstanden werden. Als Weichmacher kommen allgemein für diesen Zweck bekannte Verbindungen, z. B. Phthalate, Citrate, beispielsweise Ester der Citronensäure, wie Tributylacetylcitrat, und Benzoate in Betracht.

Die Herstellung der TPU erfolgt nach üblichen Verfahren durch Umsetzung von Diisocyanaten A) mit Verbindungen mit mindestens zwei mit Isocyanatgruppen reaktiven Wasserstoffatomen, vorzugsweise difunktionellen Alkoholen, insbesondere Polyolen B) und Kettenverlängerern C).

Als Diisocyanate A) können übliche aromatische, aliphatische und/oder cycloaliphatische Diisocyanate, bevorzugt Diphenyl-Methan-Diisocyanat (MDI), Toluylendiisocyanat (TDI), Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4,1-Iso-cyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat eingesetzt werden, besonders bevorzugt ist Diphenyl-Methan-Diisocyanat (MDI).

Als gegenüber Isocyanaten reaktive Verbindungen B) können allgemein bekannte Polyhydroxylverbindungen mit Zahlenmittlerem Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, bevorzugt sind Polyesterole, Polyetherole und/oder Polycarbonatdiole. Bevorzugte Polyesterdiole sind erhältlich durch Umsetzung von Ethandiol, Butandiol oder Hexandiol als Diol mit Adipinsäure als Dicarbonsäure, wobei die Diole einzeln oder auch als Gemisch eingesetzt werden können. Bevorzugt ist z. B. ein Gewichtsverhältnis von Butandiol zu Hexandiol von 2 zu 1 oder ein Gewichtsverhältnis von Butandiol zu Ethandiol von 1 zu 1. Bevorzugt ist weiterhin Polyetherpolyol mit einem Zahlenmittlerem Molekulargewicht von 750 bis 2500 g/mol, bevorzugt 1000 bis 2000 g/mol. Besonders bevorzugt ist Polytetrahydrofuran mit einem Zahlenmittlerem Molekulargewicht von 1000 bis 2000 g/mol.

Als Kettenverlängerungsmittel C) können allgemein bekannte Verbindungen eingesetzt werden, bevorzugt Diamine und/oder Alkandiole mit 2 bis 10 C-Atomen im Alkylenrest, insbesondere Ethylenglykol und/oder Butandiol-1,4, und/oder Hexandiol und/oder Diund/oder Tri-oxyalkylenglykole mit 3 bis 8 Kohlenstoffatomen im Oxyalkylenrest, bevorzugt entsprechende Oligo-Polyoxypropylenglykole, wobei in einigen bevorzugten Ausführungsformen auch Mischungen der Kettenverlängerer eingesetzt werden. Als bevorzugte Kettenverlängerer werden auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz. Weiter bevorzugt werden als Kettenverlängerer Ethylenglykol, Propandiol, Butandiol und Hexandiol, besonders bevorzugt Ethylenglykol und Butandiol eingesetzt.

Bevorzugt werden Katalysatoren eingesetzt, welche die Reaktion zwischen den NCO-Gruppen der Diisocyanate und den Hydroxylgruppen der isocyanatreaktiven Komponenten beschleunigen, bevorzugt tertiäre Amine, wie Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen bevorzugt Eisen-(III)- acetylacetonat, Zinnverbindungen, bevorzugt Zinndiacetat, Zinndilaurat oder die Zinndialkylsalze aliphatischer Carbonsäuren bevorzugt Dibutylzinndiacetat, Dibutylzinndilaurat oder ähnliche. Die Katalysatoren werden bevorzugt in Mengen von 0,0001 bis 0,1 Gew.-Teilen pro 100 Gew.-Teile Polyhydroxylverbindung eingesetzt.

Neben Katalysatoren werden den Komponenten bevorzugt auch Hilfsstoffe hinzugefügt. Bevorzugte Hilfsstoffe sind oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. , Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel können in allen üblichen Einsatzmengen verwendet werden. Wenn Flammschutzmittel verwendet werden, werden diese vorzugsweise in einer Menge von 1 bis 50 Gew.-% bezogen auf das Gesamtgewicht von thermoplastischem Polyurethan, verwendet.

Zur Einstellung des Molekulargewichtes werden bevorzugt gegenüber Isocyanat reaktive monofunktionelle Verbindungen, weiter bevorzugt Monoalkohole, eingesetzt.

Die Herstellung der TPU erfolgt zumeist nach üblichen Verfahren, bevorzugt mittels Bandanlagen oder Reaktionsextruder.

Die treibmittelgefüllten Kunststoffhohlkörper M basieren vorzugsweise auf einem Kunststoff, welcher eine geringere Polarität als das eingesetzte TPU aufweist. Vorzugsweise basieren sie auf Polystyrol oder Styrolacrylnitrilpolymeren (SAN). In einer bevorzugten Ausführungsform werden als Treibmittel gefüllte Kunststoffhohlkörper M sogenannte expandierbare Mikrospheren eingesetzt. Expandierbare Mikrospheren sind Mikrohohlkugeln, die aus einer dünnen Kunststoffhülle bevorzugt aus Polyacrylnitril oder Copolymere hiervon, bestehen. Diese Mikrohohlkugeln sind mit Gas oder leichtsiedenden Flüssigkeiten, bevorzugt mit Kohlenwasserstoffen, gefüllt. Durch die einwirkende Temperatur in der thermoplastischen Verarbeitung kommt es zu einer Erweichung der Kunststoffhülle und gleichzeitig zu einer Expansion des eingeschlossenen Gases. Hierdurch kommt es zu einer Expansion der Mikrospheren. Die Expansionsfähigkeit der Mikrospheren kann durch die Bestimmung der TMA-Dichte [kg/m³] beschrieben werden (Stare Thermal Analysis System Fa. Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikrospheren kollabieren.

Die erfindungsgemäß eingesetzten treibmittelgefüllten Kunststoffhohlkörper M weisen bevorzugt einen Durchmesser zwischen 20 µm und 40 µm auf. Derartige treibmittelgefüllten Kunststoffhohlkörper M sind beispielsweise erhältlich bei Akzo Nobel, Casco Products GmbH, Essen unter der Marke Expancel^{®}.
Bevorzugt bleiben diese Kunststoffhohlkörper bei den Herstellungsbedinungen geschlossen und mehr als 80%, bevorzugt mehr als 90 %, weiter bevorzugt mehr als 95 % der eingestzten Kunststoffhohlkörper M expandieren zu einer Größe von weniger als 200 µm.

Es wurde überraschend festgestellt, dass durch die Verwendung von treibmittelgefüllten Kunststoffhohlkörper M mit einer TMA-Dichte von kleiner 10 kg/m³, bevorzugt von 2-10 kg/m³ und insbesondere bevorzugt von 2 - 7 kg/m³, in Pulverform oder Masterbatchform eine besonders feine Zellstruktur, eine Unterdrückung der Lunkerbildung und keine Bildung von Einfallstellen zu beobachten ist und zudem der Verarbeitungsbereich, beispielsweise bezüglich der Temperatur, deutlich größer war, so dass Mikrospheren mit einer solchen TMA-Dichte besonders bevorzugt sind. In einer weiteren bevorzugten Ausführungsform weisen die treibmittelgefüllten Kunststoffhohlkörper M eine bimodale Teilchengrößenverteilung auf. Dabei werden die Teilchengrößen so gewählt, dass eine möglichst optimale Raumausfüllung der expandierten Teilchen möglich ist und damit eine möglichst geringe Dichte des erfindungsgemäßen Hybridschaums erhalten wird.

Der Gehalt an treibmittelgefüllten Kunststoffhohlkörpern M in der Mischung ist abhängig von der angestrebten Dichte der expandierten TPU. Bevorzugt werden pro 100 Gew.-Teilen des zu expandierenden, das heißt zu schäumendem TPU oder TPU-Blend, zwischen 1 Gew.-Teilen und 20 Gew.-Teilen, bevorzugt zwischen 2 Gew.-Teilen und 10 Gew.-Teilen der erfindungsgemäßen expandierbaren treibmittelgefüllten Kunststoffhohlkörper M eingesetzt.

Besonders bevorzugt sind erfindungsgemäße Hybridschaumstoffe, die, bezogen auf das, bevorzugt bei der Herstellung eingesetzte Gesamtgewicht an thermoplastischem Polyurethan (TPU), treibmittelgefüllten Kunststoffhohlkörper M und chemischem oder physikalischem Treibmittel T, die sich zu 100 Gew.-% addieren, basieren auf 75 Gew.-% bis 99 Gew.-%, bevorzugt zwischen 80 Gew.-% und 98 Gew.-%, besonders bevorzugt zwischen 87 Gew.-% und 97 Gew.-% TPU, 1 Gew.-% bis 20 Gew.-%, bevorzugt zwischen 2 Gew.-% und 12 Gew.-% treibmittelgefüllten Kunststoffhohlkörpern M und von 0 bis 5 Gew.-%, bevorzugt 0,1 Gew.-% bis 3 Gew.-% chemisches oder physikalische Treibmittel T. Dabei wird bei dieser Berechnung nur das Gewicht des thermoplastischen Polymers aus Diisocyanaten A), Verbindungen mit mindestens zwei gegenüber Isocyanaten reaktiven Wasserstoffatomen B) und Kettenverlängerungsmitteln C) berücksichtigt, eventuell vorhandene weitere Polymere, oder übliche Hilfs- und/oder Zusatzstoffe, wie UV-Schutzmittel, Flammschutzmittel, Füllstoffe oder Weichmacher werden bei dieser Berechnung nicht berücksichtigt. Dabei wird vorzugsweise eine Dichte von 50 bis 500 g/l, besonders bevorzugt 100 bis 300 g/l und insbesondere 110 bis 200 g/L eingestellt.

Ein Mikrospheren-Batch enthält bevorzugt 5 Gew.-% bis 90 Gew.-%, bevorzugt 25 Gew.-% bis 70 Gew.-% Mikrospheren und 10 Gew.-% bis 95 Gew.-%, bevorzugt 30 Gew.-% bis 75 Gew.-% Träger, bevorzugt thermoplastische Träger, bevorzugt EVA (Ethylenvinylacetat).

In einer weiteren bevorzugten Ausführungsform werden als Treibmittel gefüllte Kunststoffhohlkörper M mikrogranulierte, treibmittelbeladene Polystyrolkörper verwendet, welche vorzugsweise einen maximalen Durchmesser von 150µm aufweisen. Diese Partikel sind bekannt und werden üblicherweise zur Herstellung von expandiertem Polystyrol (EPS) eingesetzt.

Weiterhin können dem TPU und/oder den Kunststoffhohlkörpern M zur Verbesserung weiterer Eigenschaften entsprechende Additive, auch Hilfsstoffe genannt,zugefügt werden, beispielsweise Absorber zum Schutz gegen UV- und sichtbarem Licht, Flammschutzmittel und Weichmacher.

In einer weiteren bevorzugten Ausführungsform wird dem TPU und/oder bevorzugt den treibmittelgefüllten Kunststoffhohlkörpern M vor dem Vermischen mit dem TPU ein Trennmittel zugesetzt, um die Haftung zwischen den Hohlkörpern M und dem TPU insbesondere beim und nach dem Verstrecken zu vermindern. Als Trennmittel können übliche Substanzen verwendet werden, wie beispielsweise im "Kunststoffhandbuch, Band 7, Polyurethane", Carl Hanser Verlag, 3. Auflage 1993, Kapitel 3.4.9 genannt. Besonders bevorzugt werden als Trennmittel Wachse, Fette und/oder Öle eingesetzt.In einer besonders bevorzugten Ausführungsform werden zusätzlich zu den in den Kunststoffhohlkörpern M eingesetzten Treibmitteln zusätzliche chemische und/oder physikalische Treibmittel T eingesetzt, die nicht in Polymerkörpern eingeschlossen sind. Als chemische Treibmittel werden dabei solche Substanzen bezeichnet, die bei der Herstellung des erfindungsgemäßen Hybridschaums unter thermischer Zersetzung Gase abspalten, bevorzugt Hydrogencitrate, Hydrogencarbonate oder Azodicarbonamide, wie Celegoene^{®}, Tracel^{®}, Hydrocerol^{®}. Als physikalische Treibmittel werden Substanzen, vorzugsweise nicht reagierende Flüssigkeiten, verstanden, die bei der Herstellung des erfindungsgemäßen Hybridschaums verdampfen.
In einer bevorzugten Ausführungsform wird nur mindestens ein chemisches Treibmittel eingesetzt, in einer anderen bevorzugten Ausführungsform wird nur mindestens ein physikalisches Treibmittel eingesetzt und in einer dritten bevorzugten Ausführungsform wird sowohl mindestens ein chemisches als auch mindestens ein physikalisches Treibmittel eingesetzt.

Besonders bevorzugt wird als Treibmittel T eine Kombination aus Natriumhydrogencitrat und Natriumhydrogencarbonat eingesetzt. Die chemischen und/oder physikalischen Treibmittel werden bevorzugt auch in thermoplastischen Trägern, wie beispielsweise EVA (Ethylenvinylacetat) angebatcht. In einer Ausführungform heißt angebatcht, auch angesprochen als ein Batch von Treibmittel T, dass ein Konzentrat des chemischen und/oder physikalischen Treibmittels T in einem thermoplastischen Träger zubereitet wird und das Treibmittel T dann in dieser Form bei der Herstellung für die Herstellung des Hybridschaumes zugeführt wird.

Zur Herstellung der erfindungsgemäßen Hybridschäume werden das TPU und die treibmittelgefüllten Kunststoffhohlkörper M sowie gegebenenfalls das zusätzliche Treibmittel T, gegebenenfalls als Batch, gemischt und thermoplastisch zu den gewünschten Formkörpern verarbeitet. Dies kann beispielsweise mittels Spritzguss, Sintern oder mittels Extrusion erfolgen. Durch die Temperatur bei der thermoplastischen Verarbeitung kommt es zu einer Expansion der expandierbaren Mikrospheren und somit zur Ausbildung der expandierten TPU. Vorzugsweise wird die Schmelze kontinuierlich in die gewünschte Form gebracht und erstarrt bzw. rekristallisiert.

Das Mischen der TPU oder TPU-Blends mit den Kunststoffhohlkörper M kann in einfachen Kunststoffgranulatmischern wie z. B. Taumelmischern mit oder ohne vorheriges Aufbringen von 0,05 - 2 % Bindemittel, z. B. Paraffin- oder Mineralöl erfolgen. Das Mischen der TPU oder TPU-Blends mit Masterbatches der Kunststoffhohlkörper M kann ebenfalls in einfachen Kunststoffgranulatmischern, bevorzugt Taumelmischern, maschinell oder in einfachen Kunststoffboxen von Hand zu einem sogenannten Dryblend erfolgen. TPU, Kunststoffhohlkörper M und Treibmittel T werden bevorzugt auch mittels geeigneter Dosierungen getrennt in die Verarbeitungsmaschine dosiert.

Die treibmittelgefüllten Kunststoffhohlkörper M werden in einer bevorzugten Ausführungsform dem TPU nach dessen Herstellung zugefügt. Es ist aber auch möglich, die Kunststoffhohlkörper M bereits zur Bildung des TPU den entsprechenden Ausgangskomponenten zuzufügen. Nach erfolgter Mischung des TPU mit den Kunststoffhohlkörpern M und gegebenenfalls dem zusätzlichen Treibmittel T erfolgt die Aufschäumung des TPU vorzugsweise in oder direkt nach dem Endsegment der Mischapparatur, vorzugsweise in der Düse des Extruders oder nach dem Austreten.

In einer besonders bevorzugten Ausführungsform des erfindungsgemäßen Verfahrens werden die treibmittelgefüllten Kunststoffhohlkörper M mit dem thermoplastischen Polyurethan TPU direkt in der Anlage, in der die thermoplastische Verarbeitung durchgeführt wird, vermischt. Dabei erfolgt ggf. die Zuführung des zusätzlichen Treibmittels T bevorzugt zur Plastifiziereinheit der Verarbeitungsmaschine.

Der erfindungsgemäße Hybridschaum kann je nach Ausführung des vorzugsweise verwendeten Extruders beispielsweise als Strang, Schlauch, Folie, Platte oder Block erhalten werden.

Die Temperatur in der Reaktionsapparatur, vorzugsweise im Extruder, wird in einer bevorzugten Ausführungsform so gewählt, dass die Kunststoffhohlkörper M erweichen und in der Düse oder sofort nach dem Maschinenausgang expandieren und dass sie, gegebenenfalls über dem Zersetzungspunkt des optional zugesetzten Treibmittels T liegt, bevorzugt liegt sie über der Verdampfungstemperatur des Treibmttels T. Durch Einstellen eines hohen Gegendruck im Extruders schäumt die Masse im Extruder in einer bevorzugten Ausführungsform zunächst nicht oder nur sehr gering auf. Durch nachlassenden Gegendruck und Temperaturführung in den Endzonen des Extruders wird in bevorzugten Ausführungsformen in diesen Endzonen oder beim Austreten ein volles Aufschäumen erreicht. In einer bevorzugten Ausführungsform beträgt der Dichtebereich des erhaltenen Schaumes in dieser Verarbeitungsstufe ca. 50 g/l bis 500 g/l vorzugsweise 100 g/l bis 300 g/l und insbesondere 110 bis 200 g/l.

Erfindungsgemäß wird der Schaum wenigstens monoaxial um mindestens 10 %, vorzugsweise 100 bis 500%, besonders bevorzugt 200 bis 400 % verstreckt. Die Verstreckung (in der Literatur gleichbedeutend mitunter auch als "Reckung" bezeichnet) erfolgt in an sich bekannter Weise. Besonders bevorzugt wird der Schaum biaxial, vorzugsweise im Winkel von 60 bis 120 °, besonders bevorzugt 80 bis 100 ° verstreckt. Dabei wird die Verstreckung entlang der beiden Achsen vorzugsweise im Verhältnis 2 : 1 bis 5 : 1 und die Querverstreckung im Verhältnis 2 : 1 bis 5 : 1 vorgenommen. Besonders bevorzugt wird eine Verstreckung von 3 : 1 bis 5 : 1 durchgeführt.

Die Verstreckung kann vorzugsweise auf folgenden Apparaturen vorgenommen werden: Längstverstrecker, Querverstrecker, Längst-/Querverstrecker, Rautenverstrecker, Umrollverstrecker. Sie wird vorzugsweise bei einer Temperatur unterhalb der Erweichungstemperatur der Polymere und unterhalb der Schäumtemperatur der Treibmittel, in einer bevorzugten Ausführungsform des mindestens einen Treibmittel durchgeführt.

Überraschenderweise wurde gefunden, dass sich nach der Verstreckung, insbesondere bei Einsatz von Treibmittel T ein sehr weiches, hochelastisches Material erhalten wird, das ein exzellentes Rückstellvermögen besitzt. Die Kunststoffhohlkörper M liegen dabei vorzugsweise in Form von geschlossenzelligen Kugeln in der TPU-Matrix vor. In einer bevorzugten Ausführungsform besteht nach der Verstreckung keine oder nur noch eine geringe Haftung zwischen dem TPU und den Hohlkörpern M.

Der erfindungsgemäße elastische Hybridschaum hat in einer bevorzugten Ausführungsform eine Reißdehnung von mindestens 200 %, besonders bevorzugt von etwa 700 % bis 1000 %, wobei nach DIN 53504 gemessen wird. Nach der Verstreckung ist zur Dehnung bereits im Anfangsbereich kein hoher Kraftaufwand erforderlich, sondern der Schaum besitzt eine nahezu lineare Kraft-/Dehnungskurve bis in den Bereich bis bevorzugt 500 %, das heißt, dass die Abweichung der Kraft-Dehnungskurve von der Linie, die die Kraft bei 500 % Dehnung mit dem Ursprung des Koordiantensystems verbindet, nur um maximal 10 % des Kraftwerts bei 500 % Dehnung beträgt. Dabei weist der erfindungsgemäße Hybridschaum vorzugsweise eine Spannung bei 100% Dehnung von weniger als 0,5 MPa und bei 200% Dehnung von weniger als 1 MPa, besonders bevorzugt bei 100% Dehnung von weniger als 0,25 MPa und bei 200% Dehnung von weniger als 0,35 MPa auf. Weiter weist der erfindungsgemäße Hybridschaum eine Dehngrenze von mindestens 150%, besonders bevorzugt 200% und insbesondere 250% auf. Dabei ist unter "Dehngrenze" diejenige Dehnung zu verstehen, bei der nach Entlasten eine maximale Verformung von 0,2 % bestehen bleibt. In einer bevorzugten Ausführungsform wird unter Verformung die Streckung der Länge in Dehnrichtung, bezogen auf die vor der Dehnung vorhandene Länge verstanden.

Die erfindungsgemäßen Schäume zeichnen sich durch eine weiche, hochelastische Matrix sowie eine im Wesentlichen geschlossenzellige Struktur aus. Dabei bedeutet im Wesentlichen geschlossenzellig, dass mehr als 60 % der Zellen geschlossen sind. In einer bevorzugten Ausführungsform liegen wenigstens 80 % der Mikrospheren Zellen geschlossenzellig vor.

Vorzugsweise weist der erfindungsgemäße Hybridschaum eine Shore A Härte von weniger als 75, besonders bevorzugt weniger als 70 auf. Bevorzugt hat das für die Herstellung des Hybridschaum verwendete TPU eine Shore A Härte zwischen 15 und 75, weiter bevorzugt zwischen 20 und 70.

In einer besonders bevorzugten Ausführungsform wird der erfindungsgemäße elastische Hybridschaum zumindest auf einer Seite mit einem Gewebe, vorzugsweise einem textilen Gewebe, beispielsweise durch Aufkleben oder einlaminieren in das noch nicht ausgehärtete Material bedeckt.

Der erfindungsgemäße Hybridschaum kann dann, beispielsweise durch verschweißen, zum endgültigen Artikel, beispielsweise einem Bekleidungsstück, verarbeitet werden.

Die erfindungsgemäßen Schäume zeichnen sich insbesondere als Funktionswerkstoffe in der Sport-, Schuh- und Bekleidungsindustrie zur Herstellung wärmedämmender Artikel aus. Neben einer geringen Härte und hervorragendem Dehnverhalten zeichnen sich die erfindungsgemäßen Hybridschaumstoffe durch hervorragendes Isolationsverhalten, hervorragende UV-Stabilität, ein angenehmes Gefühl beim Berühren und hohe Beständigkeit gegenüber Hydrolyse und Alterungserscheinungen, wie beispielsweise den Verlust von mechanischen Eigenschaften, insbesondere im Salzwasser, aus. Insbesondere durch die hohe UV-Beständigkeit sind auch für UV-exponierte Verwendungen hellfarbige oder weiße Hybridschaumstoffe möglich. Auch lässt sich der erfindungsgemäße Hybridschaumstoff aufgrund der thermoplastischen Eigenschaften nahtfrei verarbeiten. Einsatzmöglichkeiten sind daher alle Arten von Bekleidungsstücken, die für den Einsatz im Wasser und am Wasser bestimmt sind, wie Surfanzüge, Taucheranzüge, Schwimmanzüge, sowie Handschuhe, Kopfbedeckungen und Füßlinge. Gegenstand der vorliegenden Erfindung ist daher auch ein solches Bekleidungsstück. Ist Flammschutzmittel enthalten, können die erfindungsgemäßen Materialien auch als Seerettungsanzüge eingesetzt werden. Neben dem Einsatz in der Bekleidungsindustrie können die erfindungsgemäßen Hybridschäume beispielsweise in der Innenausstattung von Verkehrsmitteln, wie beispielsweise Autos und Flugzeugen, beispielsweise als Wand- oder Türverkleidung, Armlehnen, Schaltkauf oder Armaturenbrett, oder in der Möbelindustrie eingesetzt werden. Weiter können die erfindungsgemäßen Gegenstände auch als wärmedämmende und stoßdämpfende Verpackungen oder teilweise Umhüllungen von Gegenständen eingesetzt werden, beispielsweise für Elektronikgegenstände, wie Laptops und Handys. In dieser Anwendung ist vor allem die hohe Dehnbarkeit des Materials sowie die nahtlose Verarbeitung vorteilhaft, wodurch das Material auch beim Aufklappen von beispielsweise Handy oder Computer zum Gebrauch nicht abgenommen werden muss.

### Beispiele

### Ausgangsmaterialien

| | |
|---|---|
| Isocyanat 1: | 4,4' Diisocyanatodiphenylmethan |
| | |
| Polyol 1: | Polytetrahydrofuran mit einer OH Zahl von 56 |
| Polyol 2: | Polytetrahydrofuran mit einer OH Zahl von 112 |
| Polyol 3: | Polyesterol auf Basis Adipinsäure, Butandiol und Ethandiol (1 : 1) und einer OH Zahl von 56 |
| KV1: | 1,4-Butandiol |
| Weich1: | Dipropylenglykoldibenzoat (Weichmacher) |
| TPUad1: | TPU auf der Basis von Polyesterol (Adipinsäure, Butandiol) OH Zahl 46, 1,4-Butandiol, 4,4' Diisocyanatodiphenylmethan, mit einer Shore A Härte von 95 |
| Stab1: | sterisch gehindertes Phenol (Antioxidationsmittel) |
| Stab2: | Polymer-Carbodiimid (Hydrolysestabilisator) |
| Stab3: | Antioxidanzkonzentrat in TPU |
| UV1: | Benztriazolderivate (UV Stabilisator) |
| Wax1: | Bisstearylamid (Gleitmittel) |
| Wax2: | Gleitmittelkonzentrat in TPU |
| Treib1: | Konzentrat aus Natriumhydrogencitrat (32 %) und Natriumhydrogencarbonat (24 %) in Ethylen-Vinylacetat-Copolymer (E-VA) |
| Polymer1: | PS/SAN-Mikrospheren in EVA |

Die Abkürzungen haben hierbei folgende Bedeutung

| | |
|---|---|
| KV: | Kettenverlängerer |
| PS: | Polystyrol |
| SAN: | Styrolacrylnitril |

Aus den Ausgangsmaterialien werden die in Tab. 1 ersichtlichen TPU 1 bis 3 hergestellt.

**Tabelle 1**

| | TPU 1 (Gew.-Teile) | TPU 2 (Gew.-Teile) | TPU 3 (Gew.-Teile) |
|---|---|---|---|
| Polyol 1 | 34,24 | | |
| Polyol 2 | 34,24 | | |
| Polyol 3 | | 50,74 | 49,41 |
| Isocyanat 1 | 25,47 | 19,28 | 8,42 |
| KV1 | 4,52 | 4,57 | 0,54 |
| Weich1 | | 25,00 | 16,70 |
| TPUad1 | | | 21,18 |
| Stab1 | 1,00 | | |
| Stab2 | | 0,41 | |
| Stab3 | | | 1,67 |
| UV1 | 0,50 | | |
| Wax2 | | | 1,25 |

### Allgemeine Verfahrensvorschrift zur Herstellung der TPU

Die Polyole (Polyol 1 - 3) wurden unter Rühren mit KV1 versetzt. Nach anschließender Erwärmung der Lösung auf 80 °C wurden Isocyanat1 sowie ggf. die in den Rezepturen aufgeführten Additive zugegeben und so lange gerührt, bis die Lösung homogen ist. Die Reaktionsmischung erhitzte sich und wurde dann auf einen beheizten, teflonbeschichteten Tisch ausgegossen. Die Gießschwarte wurde 12h bei 110°C getempert und anschließend granuliert.

### Extrusion

In den Vergleichsbeispielen V1 - V3 wurden die erhaltenen TPU 1-3 jeweils mit 0,5 Gew.-% Wax1 versetzt und auf einem Brabender Einwellenextruder zu Strängen verarbeitet.
In den erfindungsgemäßen Beispielen B1 - B3 wurden die erhaltenen TPU 1-3 ebenfalls jeweils mit 0,5 Gew.-% Wax1, sowie 2,5 Gew.-% Treib1 und 7,5 Gew.-% Polymer1 vermischt und als Dryblend extrudiert mit folgendem Extruder:
Extruder: Brabender Plasti-Corder PLE 331
UD Verhältnis: L=25 D
Schneckendurchmesser: D=19mm
Kompressionsverhältnis der Schnecke: 3:1
Düse: Runddüse
Extrusionsart: Strang
Die näheren Extrusionsbedingungen ergeben sich aus folgender Tabelle 2:

**Tabelle 2**

| Nr. | Zusammensetzung | Temperaturprofil [°C] | | | | DZ [Upm] | DM [Nm] | Bemerkungen |
|---|---|---|---|---|---|---|---|---|
| | | Z 1 | Z 2 | Z 3 | Z 4 | | | |
| V1 | TPU1 + 0,5% Wax1 | 190 | 190 | 190 | 190 | 15 | 18 | Kompakter, homogener Strang |
| V2 | TPU2 + 0,5% Wax1 | 170 | 175 | 175 | 170 | 25 | 30 | Kompakter, homogener Strang |
| V3 | TPU3 + 0,5% Wax1 | 150 | 160 | 155 | 150 | 17 | 17 | Kompakter, homogener Strang |
| B1 | TPU1 + 7,5% Polymer1 + 2,5% Treib1 + 0,5% Wax1 | 165 | 170 | 170 | 160 | 40 | 33 | Geschäumter, homogener Strang |
| B2 | TPU2 + 7,5% Polymer1 + 2,5% Treib1 + 0,5% Wax1 | 160 | 165 | 165 | 160 | 40 | 15 | Geschäumter, sehr homogener Strang |
| B3 | TPU3 + 7,5% Polymer1 + 2,5% Treib1 + 0,5% Wax1 | 150 | 160 | 155 | 150 | 40 | 10 | Geschäumter, sehr homogener Strang |

| | | | | | | | | |
|---|---|---|---|---|---|---|---|---|
| DZ = Drehzahl, DM = Drehmoment an der Schnecke | | | | | | | | |

Mechanische Eigenschaften der verwendeten TPU ohne die erfindungsgemäße Verstreckung und ohne Zusatz der Mikrospheren ( Polymer 1) gemessen an Spritzgussplatten ergeben sich aus Tabelle 3.

**Tabelle 3**

| Versuch | | V1 | V2 | V3 |
|---|---|---|---|---|
| TPU | | TPU1 | TPU2 | TPU3 |
| Dichte | [g/cm3] | 1,08 | 1,19 | 1,18 |
| Härte | [Shore A] | 73 | 62 | 39 |
| Zugfestigkeit | [MPa] | 36 | 39 | 17 |
| Reißdehnung | [%] | 830 | 1030 | 1260 |
| Weiterreißwiderstand | [N/mm] | 45 | 42 | 35 |

| | | | | |
|---|---|---|---|---|
| Härte: DIN 53505 Zugfestigkeit, Reißdehnung und Spannung: DIN 53504 Weiterreißwiderstand: DIN ISO 34-1, B (b) Dichte: DIN 53479 | | | | |

Mechanische Eigenschaften der erfindungsgemäßen TPU gemessen an erfindungsgemäß geschäumten, vorgestreckten Strangabschnitten in Anlehnung an die DIN Normen ergeben sich aus Tab. 4:

**Tabelle 4**

| Versuch | | B1 | B2 | B3 | B3 |
|---|---|---|---|---|---|
| TPU | | TPU1 | TPU2 | TPU3 | TPU3 |
| Verstreckung | | 200 % Vorstreckung | 200 % Vorstreckung | 200 % Vorstreckung | 400 % Vorstreckung |
| Dichte | [g/cm³] | 0,222 | 0,155 | 0,225 | 0,225 |
| Zugfestigkeit | [MPa] | 3,1 | 1,4 | 1,5 | 1,5 |
| Spannung bei 100 % | [KPa] | 480 | 320 | 280 | 210 |
| Spannung bei 200 % | [KPa] | 860 | 540 | 480 | 340 |
| Spannung bei 300 % | [KPa] | 1090 | 550 | 590 | 550 |
| Reißdehnung | [%] | 820 | 750 | 850 | 790 |

Aus den Werten der Tabelle 4 ergeben sich die vorteilhaften Eigenschaften der erfindungsgemäßen gestreckten TPU, nämlich niedrige Dichte, leichte Dehnbarkeit, das heißt, es ist nur wenig Kraft aufzuwenden, um die Proben zu dehnen.

## Patentansprüche

1. Elastischer Hybridschaum auf Basis
a) wenigstens eines thermoplastischen Polyurethans (TPU)
b) Kunststoffhohlkörpern, bevorzugt treibmittelgefüllter Kunststoffhohlkörper M, und gegebenenfalls
c) mindestens eines zusätzlichen physikalischen und/oder chemischen Treibmittels T. und gegebenenfalls
d) Hilfs- und Zusatzstoffen,
wobei der Hybridschaum wenigstens monoaxial verstreckt ist, vorzugsweise wenigstens im Verhältnis von 2:1, besonders bevorzugt im Verhältnis von 3:1.

2. Hybridschaum nach Anspruch 1, **dadurch gekennzeichnet, dass** er biaxial verstreckt ist.

3. Elastischer Hybridschaum nach einem der vorherigen Ansprüche, **dadurch gekennzeichnet, dass** dieser, bezogen auf das Gesamtgewicht von thermoplastischem TPU, treibmittelgefüllten Kunststoffhohlkörper M, chemischem oder physikalischem Treibmittel T, das sich zu 100 Gew. % addiert, basiert auf 75 bis 99 Gew.-% thermoplastisches Polyurethan, 1 bis 20 Gew.-% treibmittelgefüllten Kunststoffhohlkörper M und 0 bis 5 Gew.-% chemisches und/oder physikalisches Treibmittel T.

4. Hybridschaum nach wenigstens einem der vorhergehenden Ansprüche, **dadurch gekennzeichnet, dass** die Reißdehnung gemäß DIN 53504 wenigstens 200 % beträgt.

5. Hybridschaum nach wenigstens einem der vorherigen Ansprüche, **dadurch gekennzeichnet, dass** die Shore A-Härte des eingesetzten TPU weniger als 75, bevorzugt weniger als 70 beträgt.

6. Hybridschaum nach einem der vorherigen Ansprüche, **dadurch gekennzeichnet, dass** die Spannung bei 100% Dehnung weniger als 0,5 MPa und bei 200% Dehnung weniger als 1 MPa beträgt.

7. Hybridschaum nach einem der vorhergehenden Ansprüche, **dadurch gekennzeichnet, dass** das TPU Trennmittel, bevorzugt ein Wachs, Fett oder Öl, enthält.

8. Hybridschaum nach einem der vorhergehenden Ansprüche, **dadurch gekennzeichnet, dass** das TPU einen Weichmacher, bevorzugt einen Weichmacher aus der Gruppe der Phthalate, Benzoate, Glycerinester oder Ester der Citronensäure enthält.

9. Hybridschaum nach einem der vorangegangenen Ansprüche, **dadurch gekennzeichnet, dass** dessen Schaumstoffzellen im Wesentlichen geschlossenzellig sind und vorzugsweise einen Zellendurchmesser von kleiner 200 µm aufweisen.

10. Verfahren zur Herstellung von elastischen Hybridschaumstoffen bei dem man thermoplastisches Polyurethan mit treibmittelgefüllten Kunststoffhohlkörper M und gegebenenfalls chemischem oder physikalischem Treibmittel T sowie gegebenenfalls weitere Hilfs- und Zusatzstoffe vermischt, die treibmittelgefüllten Kunststoffhohlkörper M und das chemische und/oder physikalische Treibmittel T zur Expansion bringt und das erhaltene expandierte Hybridmaterial wenigstens monoaxial verstreckt.

11. Verfahren nach Anspruch 10, **dadurch gekennzeichnet, dass** die Verstreckung durch einen Längsverstrecker, Querverstrecker, Längst-/Querverstrecker, Rautenverstrecker oder Umrollverstrecker erfolgt.

12. Verfahren nach wenigstens einem der vorhergehenden Verfahrensansprüche, **dadurch gekennzeichnet, dass** die Verstreckung wenigstens 200 % bis 400 % beträgt.

13. Möbelstück oder Innenausstattung eines Verkehrsmittels, enthaltend einen elastischem Hybridschaumstoff nach einem der Ansprüche 1 bis 9.

14. Verpackung, enthaltend einen elastischem Hybridschaumstoff nach einem der Ansprüche 1 bis 9.

## Claims

1. An elastic hybrid foam based on
a) at least one thermoplastic polyurethane (TPU),
b) hollow polymer bodies, preferably hollow polymer bodies M which are filled with blowing agents, and optionally
c) at least one additional physical and/or chemical blowing agent T, and optionally
d) auxiliaries and additives,
where the hybrid foam is at least monoaxially stretched, preferably in a ratio of at least 2 : 1, in particular in a ratio of 3 : 1.

2. The hybrid foam according to claim 1 which is biaxially stretched.

3. The elastic hybrid foam according to either of the preceding claims, wherein this foam is, based on the total weight of thermoplastic TPU, hollow polymer bodies M filled with blowing agents, chemical or physical blowing agent T, which add up to 100% by weight, based on from 75 to 99% by weight of thermoplastic polyurethane, from 1 to 20% by weight of hollow polymer bodies M filled with blowing agents and from 0 to 5% by weight of chemical and/or physical blowing agent T.

4. The hybrid foam according to at least one of the preceding claims, wherein the elongation at break in accordance with DIN 53504 is at least 200%.

5. The hybrid foam according to at least one of the preceding claims, wherein the Shore A hardness of the TPU employed is less than 75, preferably less than 70.

6. The hybrid foam according to one of the preceding claims, wherein the stress at 100% elongation is less than 0.5 MPa and that at 200% elongation is less than 1 MPa.

7. The hybrid foam according to one of the preceding claims, wherein the TPU comprises release agent, preferably a wax, fat or oil.

8. The elastic hybrid foam according to one of the preceding claims, wherein the TPU comprises a plasticizer, preferably a plasticizer from the group consisting of phthalates, benzoates, glycerol esters or esters of citric acid.

9. The hybrid foam according to one of the preceding claims, wherein its foam cells are essentially closed and preferably have a cell diameter of less than 200 µm.

10. A process for producing elastic hybrid foams, wherein thermoplastic polyurethane is mixed with hollow polymer bodies M filled with blowing agents and optionally chemical or physical blowing agents T and also optionally further auxiliaries and additives, the hollow polymer bodies M filled with blowing agent and the chemical and/or physical blowing agent T are made to expand and the resulting expanded hybrid material is stretched at least monoaxially.

11. The process according to claim 10, wherein stretching is effected by means of a longitudinal stretcher, transverse stretcher, longitudinal/transverse stretcher, diamond stretcher or rolling stretcher.

12. The process according to at least one of the preceding process claims, wherein stretching is by at least 200% - 400%.

13. A furniture item or interior furnishing of a transport means which comprises an elastic hybrid foam according to any of claims 1 to 9.

14. A packaging item comprising an elastic hybrid foam according to any of claims 1 to 9.

## Revendications

1. Mousse hybride élastique à base
a) d'au moins un polyuréthane thermoplastique (TPU)
b) de corps creux en matériau synthétique, de préférence de corps creux M en matériau synthétique remplis d'un agent gonflant, le cas échéant
c) d'au moins un agent gonflant T physique et/ou chimique supplémentaire et le cas échéant
d) d'adjuvants et d'additifs,
la mousse hybride étant étirée au moins monoaxialement, de préférence au moins dans un rapport de 2:1, de manière particulièrement préférée dans une rapport de 3:1.

2. Mousse hybride selon la revendication 1, **caractérisée en ce qu'**elle est étirée biaxialement.

3. Mousse hybride élastique selon l'une quelconque des revendications précédentes, **caractérisée en ce qu'**elle, par rapport au poids total du TPU thermoplastique, des corps creux M en matériau synthétique remplis d'agent gonflant, de l'agent gonflant T chimique ou physique, dont la somme vaut 100% en poids, est basée sur 75 à 99% en poids de polyuréthane thermoplastique, 1 à 20% en poids de corps creux M en matériau synthétique remplis de matériau gonflant et 0 à 5% en poids d'agent gonflant T chimique et/ou physique.

4. Mousse hybride selon au moins l'une quelconque des revendications précédentes, **caractérisée en ce que** l'allongement à la déchirure selon DIN 53504 est d'au moins 200%.

5. Mousse hybride selon au moins l'une quelconque des revendications précédentes, **caractérisée en ce que** la dureté Shore A du TPU utilisé est inférieure à 75, de préférence inférieure à 70.

6. Mousse hybride selon l'une quelconque des revendications précédentes, **caractérisée en ce que** la tension à un allongement de 100% est inférieure à 0,5 MPa et à un allongement de 200% est inférieure à 1 MPa.

7. Mousse hybride selon l'une quelconque des revendications précédentes, **caractérisée en ce que** le TPU contient un agent de démoulage, de préférence une cire, une graisse ou une huile.

8. Mousse hybride selon l'une quelconque des revendications précédentes, **caractérisée en ce que** le TPU contient un plastifiant, de préférence un plastifiant du groupe des phtalates, des benzoates, des esters de glycérol ou des esters de l'acide citrique.

9. Mousse hybride selon l'une quelconque des revendications précédentes, **caractérisée en ce que** ses cellules de mousse sont sensiblement des cellules fermées et présentent de préférence un diamètre de cellule inférieur à 200 µm.

10. Procédé pour la production de mousses hybrides élastiques, dans lequel on mélange du polyuréthane thermoplastique avec des corps creux M remplis d'agent gonflant et le cas échéant un agent gonflant T chimique ou physique ainsi que le cas échéant d'autres adjuvants et additifs, on amène les corps creux M remplis d'agent gonflant et l'agent gonflant T chimique et/ou physique à se dilater et on étire le matériau hybride dilaté obtenu au moins monoaxialement.

11. Procédé selon la revendication 10, **caractérisé en ce que** l'étirage est réalisé par un dispositif d'étirage longitudinal, transversal, longitudinal/transversal, en losange ou à rebobinage.

12. Procédé selon au moins l'une quelconque des revendications de procédé précédentes, **caractérisé en ce que** l'étirage est d'au moins 200% à 400%.

13. Meuble ou aménagement intérieur d'un moyen de transport, contenant une mousse hybride élastique selon l'une quelconque des revendications 1 à 9.

14. Emballage, contenant une mousse hybride élastique selon l'une quelconque des revendications 1 à 9.
